# EUROPÄISCHE PATENTSCHRIFT

(11) **EP 2 214 525 B1**
(45) Veröffentlichungstag und Bekanntmachung des Hinweises auf die Patenterteilung: **16.05.2012**
(21) Anmeldenummer: 08855369.8
(22) Anmeldetag: 28.11.2008
(51) Int. Cl.: B29C 43/22, A44B 18/00

(54) **HAFTVERSCHLUSSTEIL UND VERFAHREN ZUR HERSTELLUNG EINES HAFTVERSCHLUSSTEILS**
STICKING CLOSURE PIECE, AND METHOD FOR THE PRODUCTION OF A STICKING CLOSURE PIECE
ÉLÉMENT DE FERMETURE AUTO-AGRIPPANTE ET PROCÉDÉ DE PRODUCTION D'UN ÉLÉMENT DE FERMETURE AUTO-AGRIPPANTE

(30) Priorität: 29.11.2007 DE 102007057905
(43) Veröffentlichungstag der Anmeldung: 11.08.2010
(73) Patentinhaber: Windhager Handelsgesmbh, 5303 Thalgau (AT)
(72) Erfinder: SEIFERT, Guntmar, 08525 Plauen (DE)
(74) Vertreter: Stippl, Hubert
(86) Internationale Anmeldenummer: PCT/EP2008/010120
(87) Internationale Veröffentlichungsnummer: WO 2009/068303

(56) Entgegenhaltungen:
- WO-A-00/50208
- WO-A-98/57565
- DE-A1- 10 207 975
- DE-A1-102007 032 622
- US-A1- 2005 091 805

## Beschreibung

Die vorliegende Erfindung betrifft ein Haftverschlussteil zum Herstellen eines Haftverschlusses gemäß dem Oberbegriff des Anspruchs 1 sowie ein Verfahren zur Herstellung eines Haftverschlussteils gemäß dem Oberbegriff des Anspruchs 14.

Bei dem Haftverschlussteil handelt es sich um den einen Teil einer Haftverschlusseinrichtung. Die Haftverschlusseinrichtung wird komplettiert durch ein weiteres Haftverschlussteil, welches eine Vielzahl von Fasern in nicht orientierter Anordnung aufweist, die an den Verhakungsmitteln des ersten Haftverschlussteils eingreifen und eine Verbindung der Haftverschlusseinrichtung gewährleisten. Mit zunehmender Zeit werden aus Kostengründen Haftverschlussteile mit geringerem Faseranteil eingesetzt. Daraus resultiert die Notwendigkeit, die komplementären Haftverschlussteile effektiver zu gestalten. Eine Möglichkeit der Steigerung der Effizienz besteht darin, die Größe der Verhakungsmittel zu verkleinern, um so eine größere Anzahl von Verhakungsmitteln pro Quadratzentimeter zu ermöglichen. Dies führt jedoch zu einer Erschwerung des Ausformens der Verhakungsmittel, insbesondere bei komplizierteren Formen derselben. Darüber hinaus ist eine zu hohe Anzahl von Verhakungsmitteln pro Flächeneinheit nachteilig, da sie zu einer abstoßenden Wirkung für das Gegen-Haftverschlussteil führt.

Ein gattungsgemäßes Haftverschlussteil ist bereits aus der EP 1 309 257 B 1 bekannt. Das Haftverschlussteil umfasst einen Stängel sowie ein Kopfteil mit jeweils rotationssymmetrischer Form in der Form eines Hyperboloids. Nach dem Entformen des Haftverschlussteils kann der Kopfbereich in einem nachgelagerten Kalandrierverfahren nachgeformt werden. Die Haltewirkung des Verhakungsmittels ist entlang des gesamten Umfangs des Kopfteils bei dem gattungsgemäßen Haftverschlussteil gleich.

Aus der DE 698 27 297 T 2 ist ein Verfahren zur Herstellung von Haftverschlussteilen mit Verhakungsmitteln bekannt, bei dem Verhakungsmittel beispielsweise auch mit kreuzförmigem Stängel auf einem Träger geformt werden und der Kopfbereich eines jeden Verhakungsmittels in einem nachgelagerten Kalandriervorgang mittels einer jedem Verhakungsmittel zugeordneten Gegenform im Bereich der Kalandrierwalze mit einer dachförmigen Form versehen wird. Hierbei wird die besondere Hakenbildung des Verhakungsmittels dadurch erreicht, dass durch die Gegenform eine besondere Konturierung des außen umlaufenden Randes erzielt wird. Dieses Verfahren ist in Anbetracht der Notwendigkeit von Verhakungsmitteln/ zugeordneten Gegenformen im Bereich der Kalandrierwalze konstruktiv sehr aufwändig.

Aus der US-2005/091805 ist noch ein Haftverschlussteil bekannt, wobei das Kopfteil im Bereich seiner Stirnseite im Wesentlichen abgeflacht ausgebildet ist, und wobei das Kopfteil randseitig eine zum Träger hinorientierte Randvorsprung aufweist.

Die Aufgabe der vorliegenden Erfindung besteht darin, ein neuartiges Haftverschlussteil der gattungsgemäßen Art zur Verfügung zu stellen, welches zum einen eine Erhöhung der Verhakungseffektivität gewährleistet sowie zum anderen mittels einer vergleichsweise einfachen verfahrenstechnischen Einrichtung hergestellt werden kann.

Die vorliegende Aufgabe wird bei dem gattungsgemäßen Haftverschlussteil dadurch gelöst, dass das Kopfteil im Bereich seiner Stirnseite im Wesentlichen abgeflacht ausgebildet ist, das Kopfteil randseitig einen zum Träger hin orientierten Randvorsprung aufweist, der umfängliche Verlauf des Randvorsprungs in Draufsicht auf das Kopfteil nicht rotationssymmetrisch ist und die Erstreckung des Randvorsprungs hin zum Träger entlang des Umfangs des Kopfteils ungleichmäßig ist. Aufgrund der ungleichmäßigen Verteilung der Erstreckung des Randvorsprungs ergibt sich eine umfangspositionsabhängig gesteigerte Hakenwirkung. Die Fasern erhalten somit abhängig von der Umfangsposition am Verhakungsmittel zusätzliche Angriffspositionen, d. h. Haltepositionen, wodurch verbesserte Abzugswerte erzielt werden können. Dadurch, dass das Kopfteil im Bereich seiner Stirnseite im Wesentlichen abgeflacht ausgebildet ist, ist es nicht notwendig, für die Ausbildung des Kopfteils eine dem jeweiligen Kopfteil individuell zugeordnete Gegenform im Bereich der Nachbearbeitungswalze vorzusehen. Vielmehr kann das Haftverschlussteil mit einer gemeinsamen Walze, beispielsweise Kalandrierwalze oder dergleichen, nachbehandelt werden. Durch die nicht rotationssymmetrische Form zumindest des Kopfteils, vorzugsweise des Kopfteils und des Stängels, ergibt sich bei der Nachbehandlung mittels Wärme ein nicht entlang des Umfangs gleichmäßig verteiltes Fließverhalten, wodurch sich die unregelmäßige Erstreckung des Randvorsprungs zum Träger hin einstellt.

Zweckmäßigerweise ist die ungleichmäßige Erstreckung des Randvorsprung hin zum Träger entlang des Umfangs des Kopfteils symmetrisch, insbesondere spiegelsymmetrisch und/oder punktsymmetrisch ausgebildet, so dass sich beispielsweise Bereiche von sich stärker zum Träger hin erstreckenden Randvorsprüngen diametral gegenüberliegen. Darüber hinaus wird hierdurch eine gute Entformbarkeit gewährleistet.

Insbesondere können die Bereiche des Randvorsprungs, die sich mehr zum Träger hin erstrecken, kreuzförmig im Bereich des Kopfteils angeordnet sein.

Wenn sowohl der Stängel als auch das Kopfteil, im Querschnitt gesehen, beide im Wesentlichen kreuzförmig ausgebildet sind, wird eine gute Entformbarkeit gewährleistet. Außerdem gewährleistet die vorgenannte Ausgestaltung eine hohe mechanische Festigkeit des Fußbereichs des Stängels.

Aufgrund der Nachbehandlung gehen die Übergänge zwischen den Bereichen, in denen der Randvorsprung sich mehr zum Träger hin erstreckt und den Bereichen, in denen der Randvorsprung sich weniger zum Träger hin erstreckt, fließend ineinander über.

Eine weitere Ausgestaltung der vorliegenden Erfindung ist dadurch gekennzeichnet, dass das Kopfteil länglich ausgebildet ist und sich die Bereiche des Randvorsprungs, die sich mehr zum Träger hin erstrecken, im Bereich der schmalen Endbereiche des Kopfteils befinden. Auch hierdurch wird durch die ausgewählte Form des Kopfteils die besondere Ausgestaltung des Randvorsprungs erreicht. Die längliche Ausbildung des Verschlussteils gewährleistet darüber hinaus die Vorgabe einer gerichteten Abzugskraft durch identische Ausrichtung der Orientierung der einzelnen Verhakungsmittel zur Abzugsrichtung.

Zweckmäßigerweise sind auch hier, jeweils im Querschnitt gesehen, der Stängel und das Kopfteil länglich ausgebildet. Dies gewährleistet eine besonders gute Entformbarkeit.

Besonders vorteilhaft ist es, wenn das Kopfteil konvex gekrümmte Seiten mit spitz zulaufenden Endbereichen aufweist. Das Kopfteil besitzt hierdurch eine Form, die der Form eines Längsschnittes durch eine Zitrone entspricht. Diese Form ermöglicht eine ausgeprägte Hakenwirkung im Bereich der Spitzen durch den sich ausbildenden Randvorsprung. Gleichzeitig gewährleistet die Ausrichtung der derart geformten Kopfteile nach Art einer Tragflächenwirkung eine Vorzugsrichtung bei dem Eindringen der Fasern in das Haftverschlussteil. Darüber hinaus lässt sich die vorbeschriebene Form sehr einfach entformen.

In einer alternativen Ausgestaltung kann das Kopfteil auch gewellt gekrümmte Seiten mit spitz oder rund zulaufenden Endbereichen aufweisen. Auch hier ergeben sich die vorgenannten Vorteile.

Beispielsweise kann das Kopfteil im Übrigen auch elliptisch oder oval ausgebildet sein oder geradlinige Seiten mit abgerundeten oder spitz zulaufenden Endbereichen aufweisen.

Gemäß einer weiteren Ausgestaltung der vorliegenden Erfindung sind die Seitenbereiche des Stängels über seine Länge hin bogenförmig ausgebildet und zwar derart, dass sich die Seitenbereiche des Stängels sowohl zum Träger als auch zum Kopfteil hin jeweils erweitern. Hierdurch wird zum einen eine gute Festigkeit des Fußes des Stängels am Träger erzielt. Zum anderen werden hierdurch die Randbereiche des Kopfteils nach außen hin, insbesondere nach außen hin spitz zulaufend, vorgeformt, wodurch sich ein sich schneller bei Erwärmung einstellender plastischer Effekt oder Verflüssigungseffekt und damit eine verbesserte Ausbildung der Randvorsprünge einstellt.

Des Weiteren umfasst die vorliegende Erfindung ein Verfahren zur Herstellung eines Haftverschlussteils gemäß dem Oberbegriff des Anspruchs 14. Dieses Verfahren ist dadurch gekennzeichnet, dass Sacklöcher mit nicht rotationssymmetrischer Querschnittsform verwendet werden, so dass während des Formgebungsvorgangs ein Vorformling eines Verhakungsmittels hergestellt wird, dessen Stängel und/oder Kopfteil eine nicht rotationssymmetrische Querschnittsform aufweist, der Vorformling des Verhakungsmittels zusammen mit dem Träger entformt wird, in einem nachgelagerten Bearbeitungsschritt die Oberseite des Vorformlings zumindest im Bereich des Kopfteils einer Wärmebehandlung unterzogen wird, so dass sich das Fließverhalten bzw. der thermoplastische Zustand zumindest im Randbereich des Kopfteils ändert. Das erfindungsgemäße Verfahren lässt sich ohne Notwendigkeit einer für jeden Kopfteil individuellen Gegenform durchführen und ist daher vorrichtungstechnisch vergleichsweise einfach zu realisieren. Gleichzeitig ermöglicht es die Herstellung von Haftverschlussteilen mit gesteigerter Effizienz.

Die Sacklöcher bzw. die gesamte Form in welcher sich die Sacklöcher befinden, weisen eine Schicht aus Nanopartikeln auf. Als Materialien für die Nanopartikel sind Elastomere, Polymere, Harze, z.B. Silanharze, oder duroplastische Kunststoffe vorgesehen. Die Nanopartikelschicht kann insbesondere u.a. aus Polytetrafluorethylen (PTFE) bestehen. Eine derartige Nanopartikelbeschichtung hat einen antiadhäsiven Effekt und stellt somit eine selbstreinigende Oberfläche zur Verfügung.

Zeckmäßigerweise wird in dem nachgelagerten Bearbeitungsschritt ein für sämtliche auf dem Träger befindliche Verhakungsmittel gemeinsames Andruckwerkzeug, insbesondere eine temperierte Andruckwalze, verwendet. Hierdurch kann auf bereits vorhandene Technik zurückgegriffen werden. Zudem wird hierdurch eine gesteigerte Produktionsgeschwindigkeit ermöglicht.

Als Andruckwalze kann insbesondere eine beheizte Kalandrierwalze oder eine Rollsonotrode vorgesehen sein.

Alternativ kann auch eine so genannte Luftrakel eingesetzt werden. Hierbei wird der die einzelnen Verhakungsmittel aufweisende Träger mit Heißluft beaufschlagt.

Eine zweckmäßige Ausgestaltung der vorliegenden Erfindung wird anhand der Zeichnungsfiguren nachstehend näher erläutert. Wiederkehrende Merkmale werden der Übersichtlichkeit halber lediglich mit einer einzigen Bezugsziffer versehen. Es zeigen:
- Fig. 1:: Querschnittsdarstellung eines Sacklochs;
- Fig. 2:: Draufsicht auf das Sackloch gemäß Schnittlinie II-II in Fig. 1 in Zitronenform;
- Fig. 3:: Draufsicht auf das Sackloch gemäß Schnittlinie II-II in Fig. 1 in Kreuzform;
- Fig. 4:: Draufsicht auf ein kreuzförmiges Verhakungsmittel;
- Fig. 5:: Seitenansicht des Verhakungsmittels gemäß Fig. 4;
- Fig. 6:: Draufsicht auf ein zitronenförmiges Verhakungsmittel;
- Fig. 7:: Seitenansicht des Verhakungsmittels gemäß Fig. 6 sowie
- Fig. 8:: schematische Darstellung einer Vorrichtung zur Herstellung von Haftverschlussteilen.

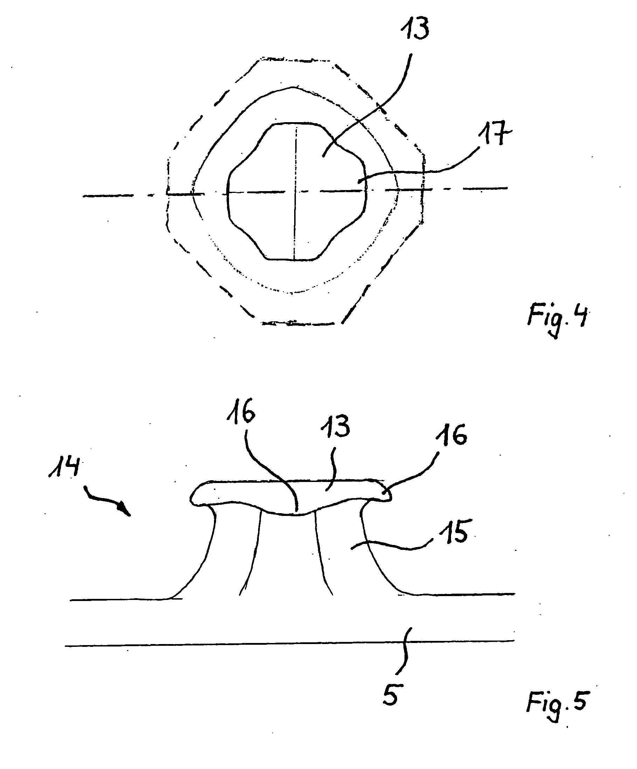

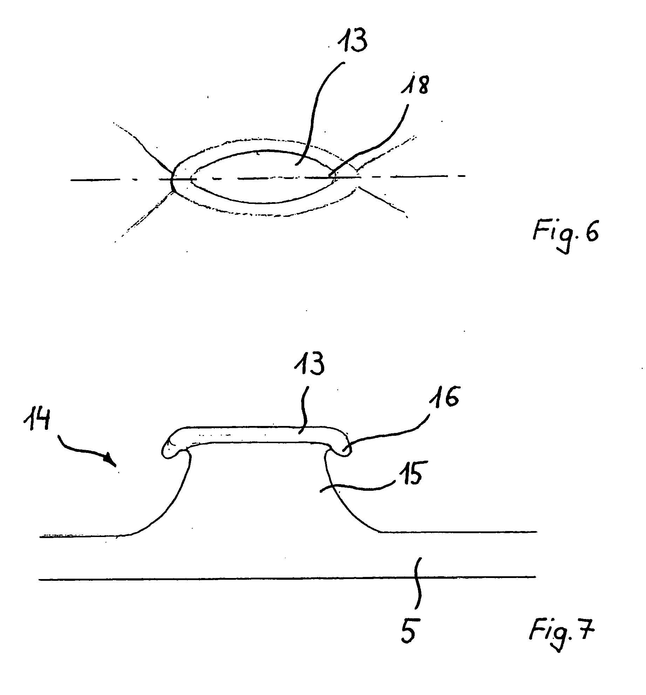

Einen Ausschnitt eines erfindungsgemäßen Haftverschlussteils zeigen insbesondere die Figuren 5 und 7. Das Haftverschlussteil 21 weist einen Träger 5 sowie eine Vielzahl von einstückig auf dem Träger 5 angeordnete Verhakungsmittel 14 auf, wobei jedes Verhakungsmittel 14 einen Stängel 15, der mit dem Träger 5 verbunden ist, sowie ein an dem äußeren Ende des Stängels 15 befindliches, verbreitertes Kopfteil 13 aufweist. In den Fig. 5 und 7 ist jeweils nur ein Verhakungsmittel 14 dargestellt. Dabei ist das Kopfteil 13 im Bereich seiner Stirnseite im Wesentlichen abgeflacht ausgebildet und weist randseitig einen zum Träger 5 hin orientierten Randvorsprung 16 auf. Der umfängliche Verlauf des Randvorsprungs 16 in Draufsicht auf das Kopfteil 13 ist nicht rotationssymmetrisch (s. insbesondere Fig. 4 und 6) und die Erstreckung des Randvorsprungs 16 hin zum Träger 5 entlang des Umfangs des Kopfteils 13 ist ungleichmäßig, was wiederum aus den Fig. 5 und 7 hervorgeht. Aufgrund dieser ungleichmäßigen Verteilung der Erstreckung des Randvorsprungs 16 ergibt sich eine entsprechend verstärkte Hakenwirkung an den Bereichen, an denen der Randvorsprung 16 sich mehr Richtung Träger 5 erstreckt. Durch diese besonders ausgeprägten überhängenden Haken werden optimale Abzugswerte erzielt, da die Haken ein Abrutschen von eingreifenden Fasern in hohem Grade verhindern.

Wie aus den Ausführungsvarianten gemäß der Zeichnungsfiguren 4 - 7 hervorgeht, ist die ungleichmäßige Erstreckung des Randvorsprungs 16 hin zum Träger 5 entlang des Umfangs des Kopfteils 13 spiegelsymmetrisch ausgebildet. Die Randvorsprünge 16 liegen sich damit diametral gegenüber. Durch die Symmetrie können die Verhakungsmittel gleichmäßig und leicht entformt werden.

Gemäß einer ersten Ausführungsvariante (Fig. 4 und 5) sind die Bereiche des Randvorsprungs 16, die sich mehr zum Träger 5 hin erstrecken, kreuzförmig im Bereich des Kopfteils 13 angeordnet. Jeweils im Querschnitt gesehen ist auch der Stängel 15 wie auch das Kopfteil 13 im Wesentlichen kreuzförmig ausgebildet. Durch diese Kreuzform werden in vier verschiedenen Richtungen hakenartige Randvorsprünge 16 erzielt. Außerdem hat die Kreuzform den Vorteil, dass der Stängel 15 eine hohe mechanische Festigkeit aufweist.

Die Übergänge zwischen den Bereichen, in denen der Randvorsprung 16 sich mehr zum Träger 5 hin erstreckt, und den Bereichen, in denen der Randvorsprung 16 sich weniger zum Träger 5 hin erstreckt, gehen ineinander fließend über. Dieser fließende Übergang ist durch die Herstellung des Verhakungsmittels 14 bedingt. Der fließende Übergang hat den Vorteil, dass sich trotz guter Verhakung der Randvorsprünge 16 mit den Fasern einerseits sich die Verhakung andererseits auch wieder gut lösen lässt, wenn die beiden Haftverschlussteile auseinander gezogen werden, was für einen Haftverschluss ebenso notwendig ist wie eine sichere Verbindung.

In einer zweiten Ausführungsvariante (s. Fig. 6 und 7) sind jeweils im Schnitt gesehen der Stängel 15 sowie das Kopfteil 13 länglich ausgebildet. Dabei weist das Kopfteil 13 konvex gekrümmte Seiten mit spitz oder rund zulaufenden Endbereichen 18 auf. Die Draufsicht auf das Verhakungsmittel 14 bzw. dessen Querschnittsform sieht aus wie eine Zitrone im Querschnitt. Diese Zitronenform hat den Vorteil, dass eine stärke Verhakung der Fasern im Wesentlichen in Längsrichtung (im Querschnitt gesehen) des Verhakungsmittels 14 erfolgt. Sind eine Vielzahl derartiger länglicher Verhakungsmittel 14 parallel zueinander angeordnet, so dass sich insgesamt eine bestimmte Textur in Längsrichtung ergibt, führt dies in Längsrichtung zu einer entsprechend erhöhten Abzugskraft im Vergleich zur Querrichtung.

Auch bei der zuletzt beschriebenen Ausführungsvariante sind die Übergänge zwischen den Bereichen, in denen der Randvorsprung 16 sich mehr zum Träger 5 hin erstreckt, und den Bereichen, in denen der Randvorsprung 16 sich weniger zum Träger 5 hin erstreckt, ineinander fließend übergehend.

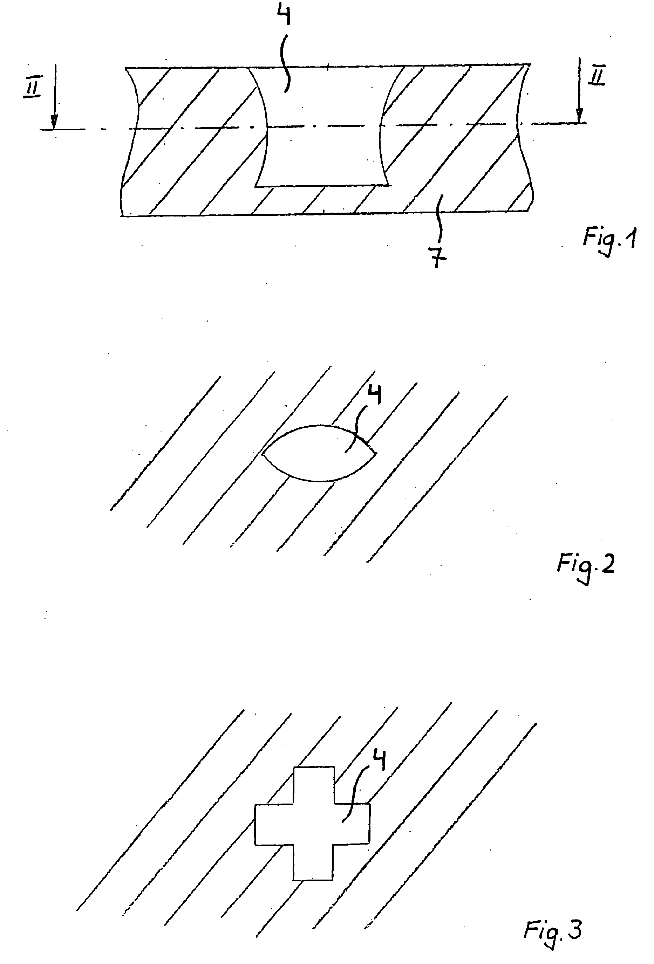

Die Seitenbereiche der Stängel 15 sind über ihre Länge hin bogenförmig ausgebildet und erweitern sich sowohl zum Träger 5 als auch zum Kopfteil 13 hin. Bereits die Sacklöcher 4 (s. Fig. 1), in welchen die Verhakungsmittel 14 vorgeformt werden, weisen bereits einen entsprechenden bogenförmigen Verlauf der Seitenbereiche auf. Vor allem der sich zum Kopfteil 13 erweiternde Bereich begünstigt die spätere Formung der hakenartigen Randvorsprünge 16.

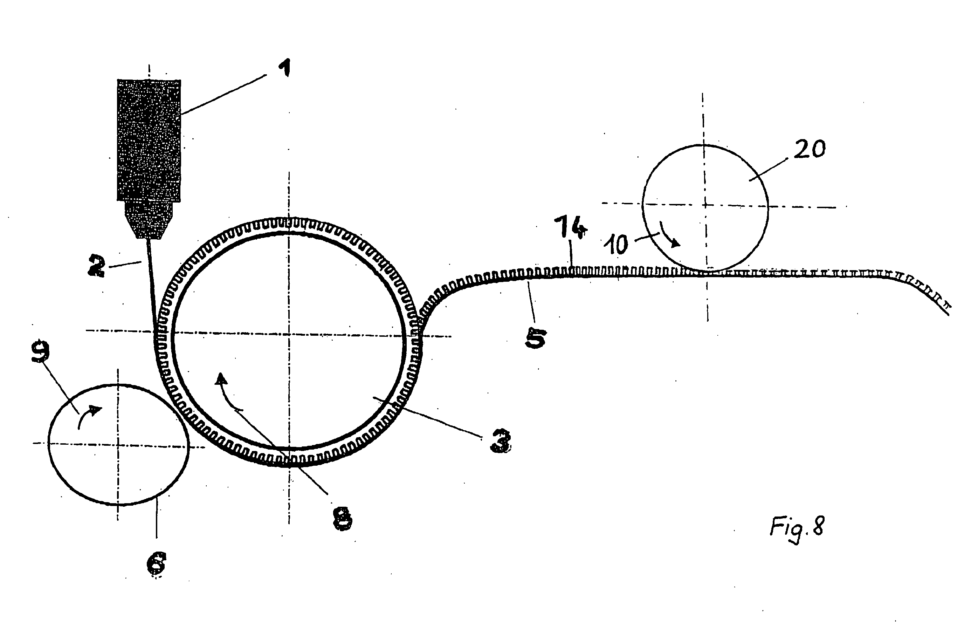

Im Folgenden wird das erfindungsgemäße Verfahren zur Herstellung eines Haftverschlussteils beschrieben, wozu zunächst auf Fig. 8 Bezug genommen wird. Das dabei hergestellte Haftverschlussteil 21 ist mit einer Vielzahl mit einem Träger 5 verbundenen Verhakungsmitteln 14 ausgestattet, wobei jedes Verhakungsmittel 14 einen Stängel 15 aufweist, der mit dem Träger 5 verbunden ist. An dem äußeren Ende des Stängels 15 befindet sich ein verbreitertes Kopfteil 13. Bei dem Verfahren wird ein formbarer Werkstoff in eine Formgebungszone zwischen einer Anpresswalze 6 und einer Formwalze 3 zugeführt, wobei diese derart angetrieben werden, dass der Träger 5 in der Formgebungszone gebildet und in eine Transportrichtung gefördert wird. Außerdem werden am Formwerkzeug 7 vorgesehene Sacklöcher 4 verwendet. Die jeweilige Drehrichtung der Walzen ist mit Pfeilen 8, 9 und 10 veranschaulicht.

Bei dem erfindungsgemäßen Verfahren werden Sacklöcher 4 mit nicht rotationssymmetrischer Querschnittsform verwendet, so dass während des Formgebungsvorgangs ein Vorformling 19 eines Verhakungsmittels 14 hergestellt wird, dessen Stängel 15 und Kopfteil 13 eine nicht rotationssymmetrische Querschnittsform aufweisen, der Vorformling 19 des Verhakungsmittels wird zusammen mit dem Träger 5 entformt, in einem nachgelagerten Bearbeitungsschritt wird die Oberseite des Vorformlings 19 zumindest in dem Bereich des Kopfteils 13 einer Wärmebehandlung unterzogen, so dass sich das Fließverhalten bzw. der thermoplastische Zustand im Randbereich des Kopfteils 13 ändert, ein sich durch Änderung des Fließverhaltens bzw. des thermoplastischen Zustands umfänglicher Randvorsprung 16 bildet sich am Kopfteil 13, der zum Träger 5 hin orientiert ist und die Ersteckung des Randvorsprungs 16 hin zum Träger 5 entlang des Umfangs des Kopfteils 13 ist ungleichmäßig. Mittels dieses Verfahrens können die oben beschriebenen Haftverschlussteile mit den vorteilhaften Verhakungsmitteln in vergleichsweise einfacher und kostengünstiger Weise hergestellt werden.

In dem nachgelagerten Bearbeitungsschritt wird für sämtliche auf dem Träger 5 befindliche Verhakungsmittel 14 eine beheizte Andruckwalze 20 verwendet. Die Andruckwalze 20 sorgt dafür, dass gleichzeitig der Kopfbereich von nebeneinander angeordneten Vorformlingen 19 in einem thermoplastischen Zustand bzw. geschmolzenen Zustand versetzt wird und sich damit die bevorzugten Randbereiche bilden.

### BEZUGSZEICHENLISTE

- 1): Breitschlitzdüse
- 2): Folienbahn
- 3): Formwalze
- 4): Sackloch
- 5): Träger
- 6): Anpresswalze
- 7): Formwerkzeug
- 8): Drehrichtung
- 9): Drehrichtung
- 10): Drehrichtung
- 13): Kopfteil
- 14): Verhakungsmittel
- 15): Stängel
- 16): Randvorsprung
- 17): Bereich
- 18): Endbereich
- 19): Vorformling
- 20): Andruckwalze
- 21): Haftverschlussteil

## Patentansprüche

1. Haftverschlussteil mit
einem Träger (5),
einer Vielzahl von einstückig auf dem Träger (5) angeordneten Verhakungsmittel (14), wobei jedes Verhakungsmittel (14) einen Stängel (15), der mit dem Träger (5) verbunden ist, sowie ein an dem äußeren Ende des Stängels (15) befindliches, verbreitertes Kopfteil (13) aufweist, wobei
(a) das Kopfteil (13) im Bereich seiner Stirnseite im Wesentlichen abgeflacht ausgebildet ist,
(b) das Kopfteil (13) randseitig einen zum Träger (5) hin orientierten Randvorsprung (16) aufweist,
**dadurch gekennzeichnet, dass**
(c) der umfängliche Verlauf des Randvorsprungs (16) in Draufsicht auf das Kopfteil (13) nicht rotationssymmetrisch ist und
(d) die Erstreckung des Randvorsprungs (16) hin zum Träger (5) entlang des Umfangs des Kopfteils (13) ungleichmäßig ist.

2. Haftverschlussteil nach Anspruch 1,
**dadurch gekennzeichnet, dass**
die ungleichmäßige Erstreckung des Randvorsprungs (16) hin zum Träger (5) entlang des Umfangs des Kopfteils (13) symmetrisch, insbesondere spiegelsymmetrisch und/oder punktsymmetrisch ausgebildet ist.

3. Haftverschlussteil nach Anspruch 1 oder 2,
**dadurch gekennzeichnet, dass**
die Bereiche des Randvorsprungs (16), die sich mehr zum Träger (5) hin erstrecken, kreuzförmig im Bereich des Kopfteils (13) angeordnet sind.

4. Haftverschlussteil nach Anspruch 3,
**dadurch gekennzeichnet, dass**
jeweils im Querschnitt gesehen der Stängel (15) sowie das Kopfteil (13) im Wesentlichen kreuzförmig ausgebildet sind.

5. Haftverschlussteil nach Anspruch 4,
**dadurch gekennzeichnet, dass** das Kopfteil (13) vier Bereiche (17) aufweist, von denen jeder den sich mehr zum Träger (5) hin erstreckenden Randvorsprung (16) aufweist.

6. Haftverschlussteil nach einem der vorhergehenden Ansprüche,
**dadurch gekennzeichnet, dass**
die Übergänge zwischen den Bereichen, in denen der Randvorsprung (16) sich mehr zum Träger (5) hin erstreckt, und den Bereichen, in denen der Randvorsprung (16) sich weniger zum Träger (5) hin erstreckt, ineinander fließend übergehen.

7. Haftverschlussteil nach Anspruch 1 oder 2,
**dadurch gekennzeichnet, dass**
das Kopfteil (13) länglich ausgebildet ist, zwei schmale Endbereiche (18) aufweist und sich die Bereiche des Randvorsprungs (16), die sich zum Träger (5) hin erstrecken, im Bereich der schmalen Endbereiche (18) sich befinden.

8. Haftverschlussteil nach Anspruch 7,
**dadurch gekennzeichnet, dass**
jeweils im Querschnitt gesehen der Stängel (15) sowie das Kopfteil (13) länglich ausgebildet sind.

9. Haftverschlussteil nach Anspruch 7 oder 8,
**dadurch gekennzeichnet, dass**
das Kopfteil (13) konvex gekrümmte Seiten mit spitz oder rund zulaufenden Endbereichen (18) aufweist.

10. Haftverschlussteil nach Anspruch 7 oder 8,
**dadurch gekennzeichnet, dass**
das Kopfteil (13) gewellt gekrümmte Seiten mit spitz oder rund zulaufenden Endbereichen (18) aufweist.

11. Haftverschlussteil nach Anspruch 7 oder 8,
**dadurch gekennzeichnet, dass**
das Kopfteil (13) elliptisch oder oval ausgebildet ist.

12. Haftverschlussteil nach Anspruch 7 oder 8,
**dadurch gekennzeichnet, dass**
das Kopfteil geradlinige Seiten mit abgerundeten oder spitz zulaufenden Endbereichen (18) aufweist.

13. Haftverschlussteil nach einem der vorhergehenden Ansprüche,
**dadurch gekennzeichnet, dass**
die Seitenbereiche des Stängels (15) über seine Länge hin bogenförmig ausgebildet sind und sich sowohl zum Träger (5) als auch zum Kopfteil (13) hin erweitern.

14. Verfahren zur Herstellung eines Haftverschlussteils mit einer Vielzahl von mit einem Träger (5) verbundenen Verhakungsmitteln (14), wobei jedes Verhakungsmittel (14) einen Stängel (15), der mit dem Träger (5) verbunden ist, sowie ein an dem äußeren Ende des Stängels (15) befindliches, verbreitertes Kopfteil (13) aufweist, bei dem ein formbarer Werkstoff in eine Formgebungszone zwischen einer Anpresswalze (6) und einer Formwalze (3) zugeführt wird und diese derart angetrieben werden, dass der Träger (5) in der Formgebungszone gebildet und in eine Transportrichtung gefördert wird und am Formwerkzeug (7) vorgesehene Sacklöcher (4) verwendet werden, insbesondere zur Herstellung eines Haftverschlussteils nach einem der vorstehenden Ansprüche,
**dadurch gekennzeichnet, dass**
(a) Sacklöcher (4) mit nicht rotationssymmetrischer Querschnittsform verwendet werden, so dass während des Formgebungsvorgangs ein Vorformling (19) eines Verhakungsmittels (14) hergestellt wird, dessen Stängel (15) und/oder Kopfteil (13) eine nicht rotationssymmetrische Querschnittsform aufweist,
(b) der Vorformling (19) des Verhakungsmittels (14) zusammen mit dem Träger (5) entformt wird,
(c) in einem nachgelagerten Bearbeitungsschritt die Oberseite des Vorformlings (19) zumindest im Bereich des Kopfteils (13) einer Wärmebehandlung unterzogen wird, so dass sich das Fließverhalten bzw. der thermoplastische Zustand zumindest im Randbereich des Kopfteils (13) ändert,
(d) ein sich durch die Änderung des Fließverhaltens bzw. des thermoplastischen Zustands umfänglicher Randvorsprung (16) am Kopfteil (13) bildet, der zum Träger (5) hin orientiert ist und
(e) die Erstreckung des Randvorsprungs (16) hin zum Träger (5) entlang des Umfangs des Kopfteils (13) ungleichmäßig ist.

15. Verfahren nach Anspruch 14,
**dadurch gekennzeichnet, dass**
in dem nachgelagerten Bearbeitungsschritt für sämtliche auf dem Träger (5) befindliche Verhakungsmittel (14) ein gemeinsames Andruckwerkzeug, insbesondere eine Andruckwalze (20) verwendet wird.

16. Verfahren nach Anspruch 15,
**dadurch gekennzeichnet, dass**
für den nachgelagerten Bearbeitungsschritt als Andruckwalze (20) eine beheizte Kalandrierwalze oder eine Rollsonotrode vorgesehen ist.

17. Verfahren nach Anspruch 14,
**dadurch gekennzeichnet, dass**
in dem nachgelagerten Bearbeitungsschritt eine Luftrakel verwendet wird.

## Claims

1. Touch-and-close fastener element, having a carrier (5),
a multiplicity of interlocking means (14) arranged integrally on the carrier (5), wherein each interlocking means (14) has a stem (15), which is connected to the carrier (5), and a widened head part (13) located at the outer end of the stem (15), wherein
(a) the head part (13) is formed in a substantially flattened manner in the region of its end face,
(b) the head part (13) has at its periphery a peripheral protrusion (16) oriented towards the carrier (5),
**characterized in that**
(c) the circumferential course of the peripheral protrusion (16) is not rotationally symmetrical when the head part (13) is viewed from above, and
(d) the extent of the peripheral protrusion (16) towards the carrier (5) is irregular around the circumference of the head part (13).

2. Touch-and-close fastener element according to Claim 1,
**characterized in that**
the irregular extent of the peripheral protrusion (16) towards the carrier (5) is formed in a symmetrical manner, in particular a mirror-symmetrical and/or point-symmetrical manner, around the circumference of the head part (13).

3. Touch-and-close fastener element according to Claim 1 or 2,
**characterized in that**
the regions of the peripheral protrusion (16) which extend further towards the carrier (5) are arranged in a cruciform manner in the region of the head part (13).

4. Touch-and-close fastener element according to Claim 3,
**characterized in that**
the stem (15) and the head part (13) are formed in a substantially cruciform manner, in each case as seen in cross section.

5. Touch-and-close fastener element according to Claim 4,
**characterized in that**
the head part (13) has four regions (17), each of which has the peripheral protrusion (16) that extends further towards the carrier (5).

6. Touch-and-close fastener element according to one of the preceding claims,
**characterized in that**
the transitions between the regions in which the peripheral protrusion (16) extends further towards the carrier (5) and the regions in which the peripheral protrusion (16) extends less far towards the carrier (5) merge seamlessly into one another.

7. Touch-and-close fastener element according to Claim 1 or 2,
**characterized in that**
the head part (13) is formed in an elongate manner, has two narrow end regions (18) and those regions of the peripheral protrusion (16) which extend towards the carrier (5) are located in the region of the narrow end regions (18).

8. Touch-and-close fastener element according to Claim 7,
**characterized in that**
the stem (15) and the head part (13) are formed in an elongate manner, in each case as seen in cross section.

9. Touch-and-close fastener element according to Claim 7 or 8,
**characterized in that**
the head part (13) has sides that are curved in a convex manner and have end regions (18) that taper in a pointed or rounded manner.

10. Touch-and-close fastener element according to Claim 7 or 8,
**characterized in that**
the head part (13) has sides that are curved in an undulating manner and have end regions (18) that taper in a pointed or rounded manner.

11. Touch-and-close fastener element according to Claim 7 or 8,
**characterized in that**
the head part (13) is formed in an elliptical or oval manner.

12. Touch-and-close fastener element according to Claim 7 or 8,
**characterized in that**
the head part has rectilinear sides having end regions (18) that are rounded or taper in a pointed manner.

13. Touch-and-close fastener element according to one of the preceding claims,
**characterized in that**
the side regions of the stem (15) are formed in an arcuate manner along its length and widen both towards the carrier (5) and towards the head part (13).

14. Method for producing a touch-and-close fastener element having a multiplicity of interlocking means (14) connected to a carrier (5), wherein each interlocking means (14) has a stem (15), which is connected to the carrier (5), and a widened head part (13) located at the outer end of the stem (15), in which a mouldable workpiece is fed into a shaping zone between a pressure roller (6) and a moulding roller (3) and these are driven such that the carrier (5) is formed in the shaping zone and is conveyed in a transport direction and blind holes (4) provided on the moulding tool (7) are used, in particular to produce a touch-and-close fastener element according to one of the preceding claims,
**characterized in that**
(a) blind holes (4) having a cross-sectional shape which is not rotationally symmetrical are used, and so a preform (19) of an interlocking means (14) is produced during the shaping process, the stem (15) and/or head part (13) of said preform having a cross-sectional shape which is not rotationally symmetrical,
(b) the preform (19) of the interlocking means (14) is demoulded together with the carrier (5),
(c) in a downstream processing step, the top side of the preform (19) is subjected to a heat treatment at least in the region of the head part (13), so that the flow behaviour or the thermoplastic state changes at least in the peripheral region of the head part (13),
(d) a peripheral protrusion (16) is formed on the circumference of the head part (13) on account of the change in the flow behaviour or in the thermoplastic state, said peripheral protrusion (16) being oriented towards the carrier (5), and
(e) the extent of the peripheral protrusion (16) towards the carrier (5) is irregular around the circumference of the head part (13).

15. Method according to Claim 14,
**characterized in that**
a joint pressing tool, in particular a pressure roller (20), is used in the downstream processing step for all of the interlocking means (14) located on the carrier (5).

16. Method according to Claim 15,
**characterized in that**
a heated calendering roller or a rolling sonotrode is provided as pressure roller (20) for the downstream processing step.

17. Method according to Claim 14,
**characterized in that**
an air knife is used in the downstream processing step.

## Revendications

1. Élément de fermeture auto-agrippante, comprenant un support (5),
une pluralité de moyens d'accrochage (14) disposés d'une seule pièce sur le support (5), chaque moyen d'accrochage (14) comprenant une tige (15) qui est reliée au support (5) ainsi qu'un élément de tête (13) élargi qui se situe sur l'extrémité extérieure de la tige (15),
(a) l'élément de tête (13) étant réalisé de manière sensiblement aplatie dans la région de son côté frontal,
(b) l'élément de tête (13) comprenant du côté du bord une saillie de bord (16) orientée en direction du support (5),
**caractérisé en ce que**
(c) l'allure périphérique de la saillie de bord (16), lorsque l'élément de tête (13) est vu de dessus, n'est pas symétrique en rotation et
(d) l'étendue de la saillie de bord (16) en direction du support (5) est irrégulière le long de la périphérie de l'élément de tête (13) .

2. Élément de fermeture auto-agrippante selon la revendication 1,
**caractérisé en ce que**
l'étendue irrégulière de la saillie de bord (16) en direction du support (5) le long de la périphérie de l'élément de tête (13) est réalisée de manière symétrique, en particulier avec une symétrie miroir et/ou une symétrie ponctuelle.

3. Élément de fermeture auto-agrippante selon la revendication 1 ou 2,
**caractérisé en ce que**
les régions de la saillie de bord (16) qui s'étendent plus en direction du support (5) sont disposées en forme de croix dans la région de l'élément de tête (13).

4. Élément de fermeture auto-agrippante selon la revendication 3,
**caractérisé en ce que**,
vu en section transversale, la tige (15) ainsi que l'élément de tête (13) sont réalisés respectivement sensiblement en forme de croix.

5. Élément de fermeture auto-agrippante selon la revendication 4,
**caractérisé en ce que**
l'élément de tête (13) comprend quatre régions (17), dont chacune comprend la saillie de bord (16) s'étendant plus en direction du support (5).

6. Élément de fermeture auto-agrippante selon l'une quelconque des revendications précédentes,
**caractérisé en ce que**
les transitions entre les régions dans lesquelles la saillie de bord (16) s'étend plus en direction du support (5) et les régions dans lesquelles la saillie de bord (16) s'étend moins en direction du support (5) se prolongent les unes dans les autres de manière continue.

7. Élément de fermeture auto-agrippante selon la revendication 1 ou 2,
**caractérisé en ce que**
l'élément de tête (13) est allongé, comprend deux régions d'extrémité (18) étroites, et les régions de la saillie de bord (16) qui s'étendent en direction du support (5) se situent dans la région des régions d'extrémité (18) étroites.

8. Élément de fermeture auto-agrippante selon la revendication 7,
**caractérisé en ce que**,
vu en section transversale, la tige (15) ainsi que l'élément de tête (13) sont respectivement allongés.

9. Élément de fermeture auto-agrippante selon la revendication 7 ou 8,
**caractérisé en ce que**
l'élément de tête (13) comprend des côtés de courbure convexe dotés de régions d'extrémité (18) se terminant en pointe ou de manière arrondie.

10. Élément de fermeture auto-agrippante selon la revendication 7 ou 8,
**caractérisé en ce que**
l'élément de tête (13) comprend des côtés de courbure ondulée dotés de régions d'extrémité (18) se terminant en pointe ou de manière arrondie.

11. Élément de fermeture auto-agrippante selon la revendication 7 ou 8,
**caractérisé en ce que**
l'élément de tête (13) est elliptique ou ovale.

12. Élément de fermeture auto-agrippante selon la revendication 7 ou 8,
**caractérisé en ce que**
l'élément de tête comprend des côtés rectilignes dotés de régions d'extrémité (18) arrondies ou se terminant en pointe.

13. Élément de fermeture auto-agrippante selon l'une quelconque des revendications précédentes,
**caractérisé en ce que**
les régions latérales de la tige (15) sont réalisées de manière arquée le long de sa longueur et s'élargissent non seulement en direction du support (5) mais encore en direction de l'élément de tête (13).

14. Procédé de production d'un élément de fermeture auto-agrippante comprenant une pluralité de moyens d'accrochage (14) reliés à un support (5), chaque moyen d'accrochage (14) comprenant une tige (15) qui est reliée au support (5) ainsi qu'un élément de tête (13) élargi qui se situe sur l'extrémité extérieure de la tige (15), selon lequel procédé une matière façonnable est amenée dans une zone de façonnage entre un cylindre de pressage (6) et un cylindre de façonnage (3), et ces derniers sont entraînés de telle sorte que le support (5) soit formé dans la zone de façonnage et soit transporté dans une direction de transport, et des trous borgnes (4) prévus sur l'outil de façonnage (7) sont utilisés, en particulier pour la production d'un élément de fermeture auto-agrippante selon l'une quelconque des revendications précédentes,
**caractérisé en ce que**
(a) des trous borgnes (4) de section transversale non symétrique en rotation sont utilisés, de telle sorte qu'une préforme (19) d'un moyen d'accrochage (14) soit produite pendant l'opération de façonnage, la tige (15) et/ou l'élément de tête (13) de ce moyen d'accrochage présentant une section transversale non symétrique en rotation,
(b) la préforme (19) de l'élément d'accrochage (14) est démoulée conjointement avec le support (5),
(c) lors d'une étape de traitement ultérieure, le côté supérieur de la préforme (19) est soumis à un traitement thermique au moins dans la région de l'élément de tête (13), de telle sorte que le comportement d'écoulement ou l'état thermoplastique soit modifié au moins dans la région de bord de l'élément de tête (13),
(d) une saillie de bord (16) périphérique, qui est orientée en direction du support (5), se forme sur l'élément de tête (13) par la modification du comportement d'écoulement ou de l'état thermoplastique et
(e) l'étendue de la saillie de bord (16) en direction du support (5) est irrégulière le long de la périphérie de l'élément de tête (13) .

15. Procédé selon la revendication 14,
**caractérisé en ce que**
lors de l'étape de traitement ultérieure pour tous les moyens d'accrochage (14) se situant sur le support (5), un outil presseur commun est utilisé, en particulier un cylindre presseur (20).

16. Procédé selon la revendication 15,
**caractérisé en ce**
**qu'**un cylindre de calandrage chauffé ou une sonotrode rotative est prévu(e) en tant que cylindre presseur (20) pour l'étape de traitement ultérieure.

17. Procédé selon la revendication 14,
**caractérisé en ce**
**qu'**une racle pneumatique est utilisée lors de l'étape de traitement ultérieure.
